# EUROPEAN PATENT APPLICATION

(11) **EP 4 742 780 A1**
(43) Date of publication of application: **13.05.2026**
(21) Application number: 23944369.0
(22) Date of filing: 05.07.2023
(51) Int. Cl.: H04W 52/30, H04W 52/50, H04W 74/08

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/025002
(87) International publication number: WO 2025/009121

(57) **Abstract**

A terminal according to an aspect of the present disclosure includes: a receiving section that receives information related to an additional cell corresponding to a serving cell; and a control section that controls, in a case where total transmit power exceeds a certain value when a plurality of UL transmissions are performed including a random access channel for the additional cell and another UL transmission, power allocation for a UL transmission on the basis of a priority order corresponding to a random access channel transmission for the additional cell and a priority order corresponding to another UL transmission.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, radio communication systems later than Rel. 17/5G), it is assumed that communication using multi-TRP between a plurality of cells including a non-serving cell (for example, additional cell) or communication using mobility between a plurality of cells (inter-cell mobility) including a non-serving cell (for example, candidate cell) is supported.

Meanwhile, in a case where a UL transmission is possible for one or a plurality of additional cells/candidate cells, how the UL transmission is controlled is an issue. Unless such UL transmission for one or a plurality of additional cells/candidate cells is appropriately controlled, quality of communication using a plurality of transmission/reception points may be degraded.

In view of this, an object of the present disclosure is to provide a terminal, a radio communication method, and a base station that enable a UL transmission to be appropriately controlled even in a case where the UL transmission is possible for one or a plurality of additional cells/candidate cells. Solution to Problem

A terminal according to an aspect of the present disclosure includes: a receiving section that receives information related to an additional cell corresponding to a serving cell; and a control section that controls, in a case where total transmit power exceeds a certain value when a plurality of UL transmissions are performed including a random access channel for the additional cell and another UL transmission, power allocation for a UL transmission on the basis of a priority order corresponding to a random access channel transmission for the additional cell and a priority order corresponding to another UL transmission. Advantageous Effects of Invention

An aspect of the present disclosure enables a UL transmission to be appropriately controlled even in a case where the UL transmission is possible for one or a plurality of additional cells/candidate cells.

### Brief Description of Drawings

[FIG. 1] FIG. 1 is a diagram to show an example of timing advance groups (TAGs) that cells included in a cell group belong to.
[FIG. 2] FIG. 2A is a diagram to show an example of intra-cell multi-TRP. FIG. 2B is a diagram to show an example of inter-cell multi-TRP.
[FIG. 3] FIG. 3A is a diagram to show an example of mobility of a UE in Rel. 17. FIG. 3B is a diagram to show an example of mobility of a UE in Rel. 18 or later versions.
[FIG. 4] FIG. 4 is a diagram to show an example of association between serving cells and candidate cells.
[FIG. 5] FIG. 5A is a diagram to show a first example of Option 2 for a candidate cell configuration. FIG. 5B is a diagram to show a second example of Option 2 for the candidate cell configuration.
[FIG. 6] FIG. 6 is a diagram to show a PDCCH-indicated RACH (PDCCH ordered RACH), with random access response (RAR) monitoring, for a serving cell.
[FIG. 7] FIG. 7 is a diagram to show a PDCCH-indicated RACH (PDCCH ordered RACH), without random access response (RAR) monitoring, for a candidate cell.
[FIG. 8] FIG. 8 is a diagram to show an example of inter-cell multi-TRP.
[FIG. 9] FIG. 9 is a diagram to show an example of UL transmission power control according to the present embodiment.
[FIG. 10] FIG. 10 is a diagram to show an example of a schematic structure of a radio communication system according to one embodiment.
[FIG. 11] FIG. 11 is a diagram to show an example of a structure of a base station according to one embodiment.
[FIG. 12] FIG. 12 is a diagram to show an example of a structure of a user terminal according to one embodiment.
[FIG. 13] FIG. 13 is a diagram to show an example of a hardware structure of the base station and the user terminal according to one embodiment.
[FIG. 14] FIG. 14 is a diagram to show an example of a vehicle according to one embodiment.

### Description of Embodiments

### (TCI, Spatial Relation, QCL)

For NR, it is under study to control reception processing (for example, at least one of reception, de-mapping, demodulation, and decoding) and transmission processing (for example, at least one of transmission, mapping, precoding, modulation, and coding) of at least one of a signal and a channel (which may be referred to as a signal/channel), in a UE, based on a transmission configuration indication state (TCI state).

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel that a TCI state or spatial relation is configured (specified) for may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

An RS to have a QCL relationship with such a channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a demodulation reference signal (DMRS), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Timing Advance Group)

A transmission timing for a UL (Uplink) channel and/or UL signal (UL channel/signal) is adjusted with a timing advance (TA). Reception timings of UL channels/signals from different user terminals (UEs) are adjusted on the radio base station (also referred to as Transmission and Reception Point (TRP), gNodeB (gNB), or the like) side.

A UE may perform timing control for a UL transmission, using timing advances for respective timing advance groups (TAGs) configured in advance (multiple timing advances).

In a case where such multiple timing advances are used, timing advance groups (TAGs) classified according to transmission timings are supported. A UE may control UL transmission timings in the respective TAGs, assuming that the same TA offset (or TA value) is used for each TAG. In other words, the TA offset may be configured for each TAG independently.

In the case where the multiple timing advances are used, a UE adjusts a transmission timing for cells belonging to each TAG independently, thereby allowing reception timings of uplink signals from the UE to be aligned at a radio base station, even when a plurality of cells are used.

A TAG (for example, serving cells belonging to the same TAG) may be configured by using a higher layer parameter. For the serving cells belonging to the same TAG (for example, serving cells configured with UL), the same timing advance value may be employed. A timing advance group including an SpCell of a MAC entity may be referred to as a primary timing advance group (PTAG) and TAGs other than the PTAG may be referred to as secondary timing advance groups (STAGs). The maximum number of TAGs may be X (for example, X = 4) per cell group (for example, MCG/SCG).

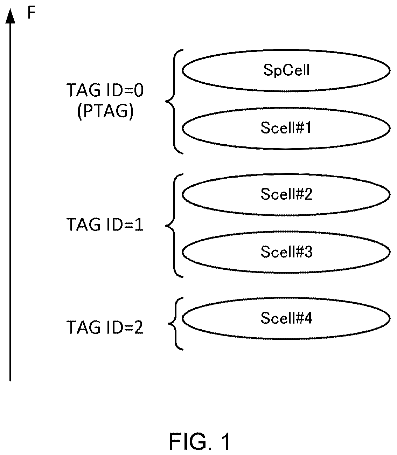

In an existing system (for example, Rel-16 NR), a configuration of four TAGs at maximum per cell group (for example, MCG/SCG) is supported (see FIG. 1). FIG. 1 shows a case where three TAGs are configured for a cell group including an SpCell and SCells #1 to #4. Here, a case is shown where the SpCell and SCell #1 belong to a first TAG (PTAG or TAG #0), SCell #2 and SCell #3 belong to a second TAG (TAG #1), and SCell #4 belongs to a third TAG (TAG #2).

A timing advance command (TA command) may be notified to a UE by using a MAC control element (for example, MAC CE). The TA command is a command that indicates a transmission timing value for an uplink channel and is included in the MAC control element. The TA command (TAC) is signaled in a MAC layer from a radio base station to the UE. The UE controls a certain timer (for example, TA timer), based on reception of the TA command.

### (Multi-DCI-based Multi-TRP)

In Rel. 18 or later versions, communication using a plurality of TRPs is supported. In communication according to multi-DCI-based multi-TRP (for example, M-DCI M-TRP), a UE receives DL signals/DL channels from TRPs in different timings. For example, DL transmissions transmitted to the UE from the TRPs have different delays/transmission timings. In this case, when UL transmissions for the TRPs are supported, the UE requires a plurality of timing advances (TAs) for the TRPs.

As described above, in multi-DCI-based multi-TRP, it is assumed that a plurality of (for example, two) timing advances (TAs) are supported for a serving cell.

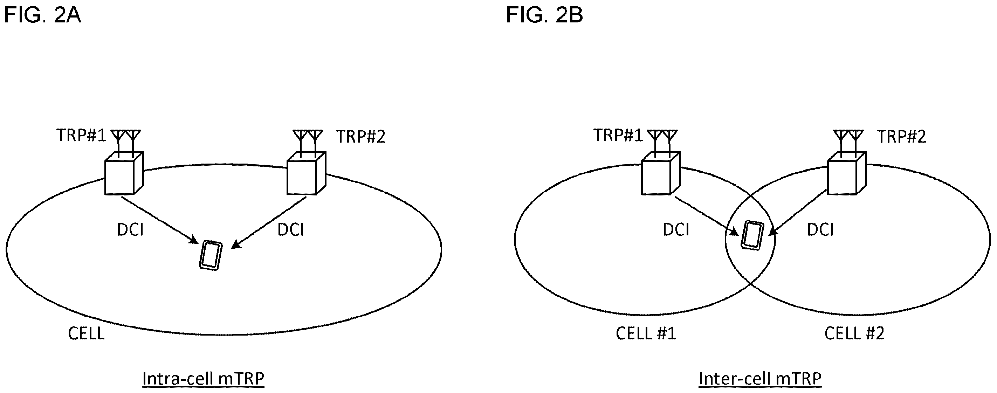

Multi-DCI-based multi-TRP may be applied to at least one of intra-cell multi-TRP (for example, Intra-cell mTRP) and inter-cell multi-TRP (for example, Inter-cell mTRP) (see FIGS. 2A and 2B). FIG. 2A shows an example of intra-cell multi-TRP, in which a case is shown that two TRPs (for example, TRP #1 and TRP #2) are configured for one cell. FIG. 2B shows an example of inter-cell multi-TRP, in which a case is shown that a TRP is configured for each cell (for example, TRP #1 and TRP #2 are configured for first cell #1 and second cell #2, respectively).

In a case where inter-cell multi-TRP is employed, an additional cell/additional PCI may be configured in addition to a serving cell. The additional cell/additional PCI may be a serving cell or may be a non-serving cell. The additional cell to be configured may be one or a plurality of additional cells.

In multi-DCI-based multi-TRP, up to two TA offset values (for example, n-TimingAdvanceOffet values) per serving cell may be supported.

For acquisition of TAs corresponding to the respective TRPs, a RACH procedure may be employed. The RACH procedure may be a RACH procedure triggered by a PDCCH order (for example, also referred to as "PDCCH ordered RACH" or "CFRA triggered by PDCCH order").

A timing advance group (for example, TAG) for a UL transmission may be determined based on a TAG associated with a TCI for the UL transmission. For example, TCIs belonging to the same CORESET pool index (or TRP) may be associated with the same TAG.

In inter-cell multi-TRP, with a PDCCH order from a certain TRP (or one TRP), a RACH for the same TRP may be triggered or a RACH for a different TRP may be triggered.

In inter-cell multi-TRP, a PRACH configuration may be configured for each cell (for example, non-serving cell/additional serving cell).

In inter-cell multi-TRP, in order to derive a TA for an additional cell (for example, non-serving cell), a RACH may be triggered for the additional cell. For a multi-DCI-based inter-cell multi-TRP operation (for example, a multi-DCI based inter-cell Multi-TRP operation), one additional PRACH configuration may be supported for each additional cell/additional PCI to be configured. The additional PRACH configuration may be used in the RACH procedure to be triggered by the PDCCH order of the corresponding additional PCI configured.

### (L1L2-triggered Mobility (LTM))

In Rel. 18 or later versions, it is assumed that a cell switching operation (for example, L1L2-triggered mobility (LTM)) by using L1/L2 signaling (for example, MAC CE/DCI) is supported.

In a case where a UE performs a UL transmission for one or a plurality of cells/TRPs, at least one of Scenario 1 and Scenario 2 below may be supported. Note that, in the present disclosure, a serving cell may be interpreted as a TRP in the serving cell. Layer1/layer2 (L1/L2) and DCI/medium access control control element (MAC CE) may be interchangeably interpreted. In the present disclosure, a physical cell ID (Physical Cell Identity (PCI)) different from a PCI of a current serving cell may be referred to as a "different PCI" simply. A non-serving cell, a cell having a different PCI, and an additional cell may be interchangeably interpreted.

### <Scenario 1>

Although Scenario 1 corresponds to, for example, multi-TRP inter-cell mobility, this is not restrictive and Scenario 1 may be a scenario not corresponding to multi-TRP inter-cell mobility.
(1) The UE receives, from a serving cell, a configuration of an SSB for beam measurement of a TRP corresponding to a PCI different from that of the serving cell and a configuration necessary in order to use a radio resource in data transmission/reception (including a resource for the different PCI).
(2) The UE performs beam measurement of the TRP corresponding to the different PCI to report the beam measurement result to the serving cell.
(3) Based on the reporting, a transmission configuration indication (TCI) state associated with the TRP corresponding to the different PCI is activated by L1/L2 signaling from the serving cell.
(4) The UE performs transmission/reception by using a UE-dedicated channel on the TRP corresponding to the different PCI.
(5) The UE is required to cover the serving cell all the time, even in a case of multi-TRP. The UE is required to use a common channel (broadcast control channel (BCCH), paging channel (PCH)) or the like from the serving cell, similarly to existing systems.

In Scenario 1, when the UE transmits/receives a signal to and from the additional cell/TRP (a TRP corresponding to the PCI of the additional cell), the serving cell (serving cell assumption in the UE) is not changed. The UE is configured, from the serving cell, with a higher layer parameter related to a PCI of a non-serving cell. Scenario 1 may be employed in Rel. 17, for example.

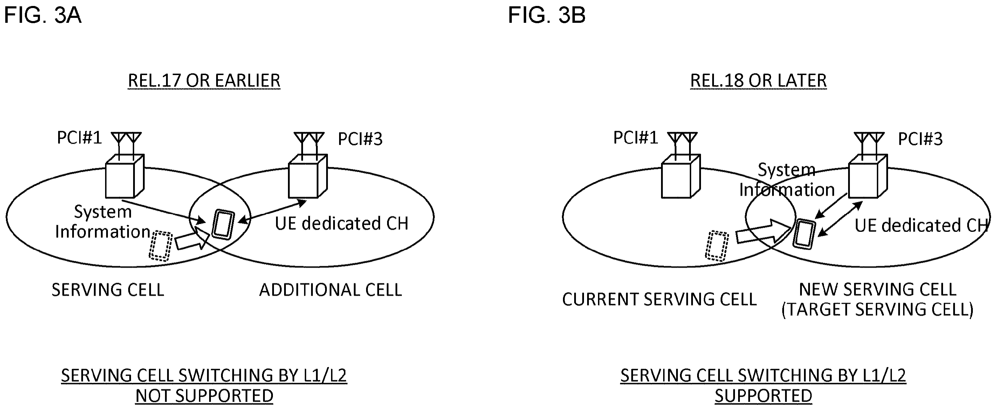

FIG. 3A is a diagram to show an example of mobility of a UE in Rel. 17. A case is assumed where the UE moves from a cell (serving cell) of PCI #1 to a cell (additional cell) of PCI #3 (having an overlap with the serving cell). In this case, in Rel. 17, serving cell switching by L1/L2 is not supported.

The additional cell is a cell having an additional PCI different from the PCI of the serving cell. The UE can receive/transmit a UE-dedicated channel (UE-dedicated CH) from and to the additional cell. Meanwhile, the UE is required to be in a coverage of the serving cell in order to receive a UE-common channel (for example, system information/paging/short message). When the UE moves out of the coverage of the serving cell, cell switching (for example, processing of RRC reconfiguration or the like) by handover (also referred to as L3 mobility) or the like is required.

### <Scenario 2>

In Scenario 2, L1/L2 inter-cell mobility (for example, L1L2-triggered mobility (LTM)) is employed. In L1/L2 inter-cell mobility, serving cell change can be performed by using a function such as beam control, without performing RRC reconfiguration. In other words, transmission/reception to and from a candidate cell/additional cell can be performed, without handover. Handover requires RRC reconnection or the like that causes a data communication disabled period, and thus L1/L2 inter-cell mobility not requiring such handover is employed, thereby enabling data communication to be continued even in serving cell change. Scenario 2 may be employed in Rel. 18 or later versions, for example. In Scenario 2, for example, the following procedure is performed.
(1) The UE receives, from a serving cell (current serving cell), configuration information (for example, configuration of an SSB or the like) related to a cell (additional cell/candidate cell/target serving cell) having a different PCI in order for beam measurement/serving cell change.
(2) The UE performs beam measurement for the cell using the different PCI to report the measurement result to the serving cell.
(3) The UE may receive a configuration (serving cell/candidate cell configuration) of the cell having the different PCI by higher layer signaling (for example, RRC). In other words, preconfiguration related to the serving cell change may be performed. Such configuration may be performed together with configuration in (1) or may be performed separately.
(4) Based on the reporting, a TCI state for the cell having the different PCI may be activated by L1/L2 signaling in accordance with the serving cell change. The activation of the TCI state and the serving cell change may be performed separately.
(5) The UE changes the serving cell (serving cell assumption) and, by using a pre-configured UE-dedicated channel and the TCI state, initiates reception/transmission.

In other words, in Scenario 2, the serving cell (serving cell assumption in the UE) is updated by L1/L2 signaling. Scenario 2 may be employed in Rel. 18 or later versions.

FIG. 3B is a diagram to show an example of mobility of a UE in Rel. 18. In Rel. 18 or later versions, the serving cell is switched by L1/L2 (for example, DCI/MAC CE). Here, a case is shown where, by L1/L2 signaling, switching is made from PCI #1 corresponding to a current serving cell to PCI #3 corresponding to a candidate cell (for example, target serving cell).

The UE can receive/transmit, from and to a new serving cell (target serving cell #3), a common channel (for example, system information/paging/short message)/UE-dedicated channel. With this, the UE may be out of the coverage of serving cell PCI #1 of before such switching.

### (Configuration of Candidate Cell in LTM)

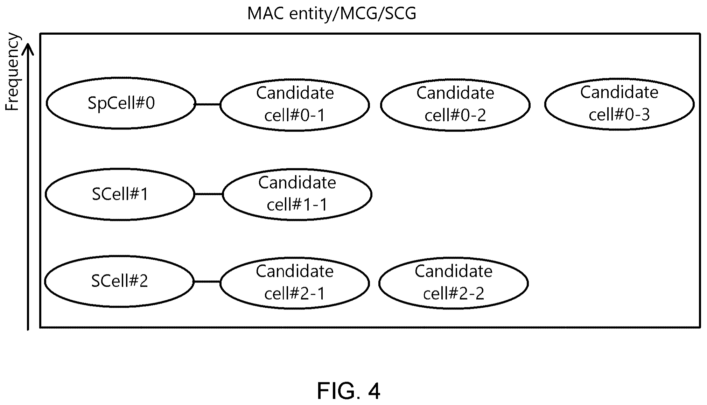

FIG. 4 is a diagram to show an example of association between serving cells and candidate cells. SpCell #0, SCell #1, or SCell #2 is assumed to be a serving cell (for example, a current serving cell/a candidate cell to be a serving cell). Note that an SpCell means a special cell (including a primary cell (PCell) and a primary secondary cell (PSCell)). An SCell means a secondary cell.

A candidate cell (for example, a target serving cell/a candidate cell other than a current serving cell) may be associated with the SpCell/SCell. In FIG. 4, SpCell #0 is associated with Candidate cell #0-1, Candidate cell #0-2, and Candidate cell #0-3. SCell #1 is associated with Candidate cell #1-1. SCell #2 is associated with Candidate cell #2-1 and Candidate cell #2-2. As described above, one or more candidate cells (for example, target serving cells/candidate serving cells other than a current serving cell) may be associated with a serving cell.

Alternatively, no candidate cell may be clearly associated with each serving cell.

Regarding a configuration of a candidate cell to be a candidate for a case of changing a serving cell, for example, Option 1 and Option 2 below are conceivable.

### <Option 1>

Information in ServingCellConfig may include information related to a plurality of candidate cells, as in inter-cell mobility in Rel. 17. In this case, the plurality of candidate cells are required to share the same configuration of PDCCH/PDSCH/UL or the like with the serving cell.

For example, in inter-cell mobility in Rel. 17, "mimoParam-r17" is added under ServingCellConfig and PCI configuration information is added. In mimoParam-r17, additionalPCI-ToAddModList-r17 being an information list of additional SSBs having a PCI different from a PCI of the serving cell may be included. The candidate cells (additional cells, cells having additionalPCI) may be applied with a configuration the same as that for the serving cell, except part of the information.

### <Option 2>

A plurality of candidate cells may be applied with a complete configuration (for example, ServingCellConfig) corresponding to the cells. In other words, the candidate cells may share no configuration information with the serving cell and may be applied with another configuration (for example, another higher layer parameter). A UE is provided with such a complete configuration for the candidate cells, allowing the UE to perform appropriate communication with the candidate cells.

For example, the plurality of candidate cells may be, by reusing a carrier aggregation (CA) configuration framework, associated with serving cells. In the CA configuration framework, it is possible to configure an SpCell per cell group and to add a plurality of SCells. For example, a serving cell may be configured per cell group in L1/L2 inter-cell mobility and a plurality of candidate cells may be configured. A candidate cell may be activated/deactivated by using a MAC CE. The candidate cell may be activated/deactivated in a manner that TCI information corresponding to the candidate cell is activated/deactivated by the MAC CE. Such a method is considered profitable for complexity in UE operations to be reduced.

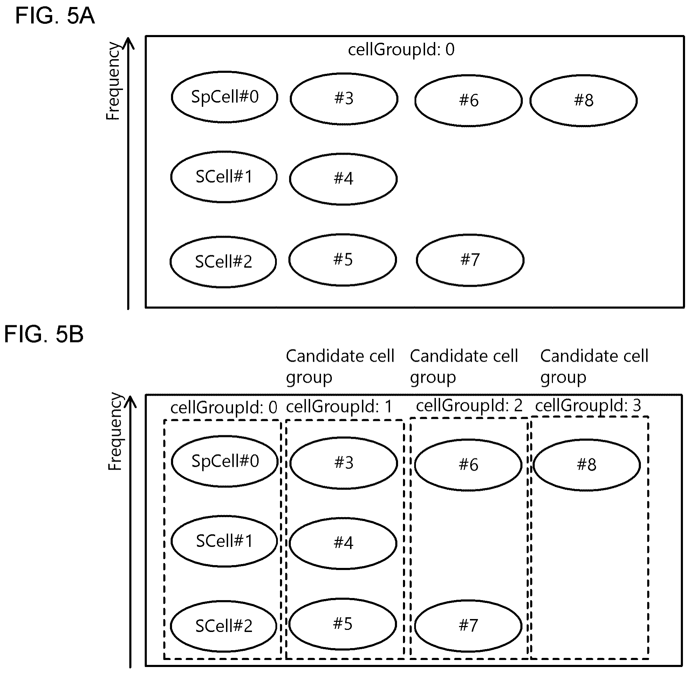

FIG. 5A is a diagram to show a first example of Option 2 for a candidate cell configuration. In the example of FIG. 5A, for candidate cells, a common candidate cell pool for cell switch in an MCG/SCG is employed. In other words, the candidate cells are handled as one pool (group), irrespective of frequency bands.

FIG. 5B is a diagram to show a second example of Option 2 for the candidate cell configuration. In the example of FIG. 5B, a plurality of cell groups are configured and cell group switch is possible to be made by L1/L2 signaling. A candidate cell is configured for each of the cell groups and a configuration for each group includes a corresponding index of SpCell and SCell.

### (TA Acquisition in LTM)

Regarding a UL transmission for a candidate cell, it is conceivable that a UE performs the UL transmission taking account of a TA corresponding to the candidate cell. In a case of taking account of the TA for the candidate cell, the UE is required to perform TA acquisition for the candidate cell (for example, TA acquisition of candidate cells).

As the TA acquisition of candidate cells, a plurality of TA acquisition methods such as TA acquisition using a RACH (for example, RACH-based solutions) and TA acquisition not using a RACH (for example, RACH-less solutions) are conceivable. For the TA acquisition using a RACH, a method with RAR monitoring and a method without RAR monitoring may be supported. A TA acquisition method may be interpreted as a TA acquisition scheme, a TA acquisition type, or a TA acquisition procedure. In the present disclosure, acquisition of a TA, measurement of a TA, calculation of a TA, computation of a TA, and determination of a TA may be interchangeably interpreted.

For example, the UE may transmit, to a candidate cell, a RACH indicated/triggered by a PDCCH (for example, PDCCH ordererd RACH) to thereby acquire a TA for the candidate cell. Information (for example, TA value) related to the TA for the candidate cell may be included in a response signal for the RACH (for example, RAR). The RAR may be transmitted from the serving cell or may be transmitted from the candidate cell. Alternatively, the TA for the candidate cell may be acquired by using a RACH triggered by the UE or a RACH triggered in a higher layer from a network. A PDCCH order may be triggered only by a source cell (or serving cell).

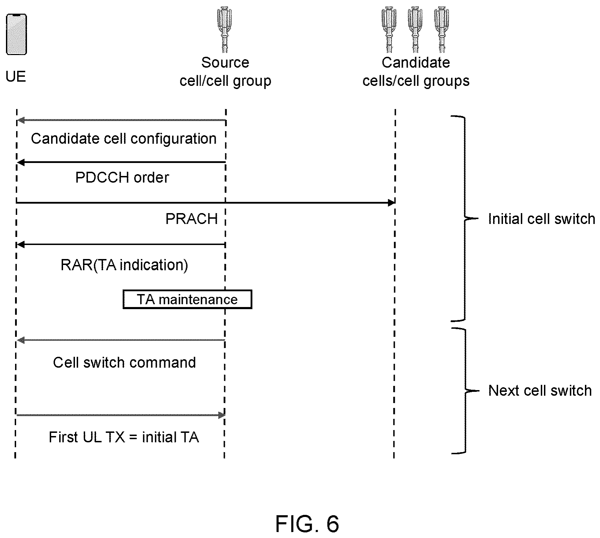

FIG. 6 is a diagram to show an example of a PDCCH ordered RACH with RAR monitoring. Note that, in the present disclosure, a source cell and a source cell group may be interchangeably interpreted. A candidate cell and a candidate cell group may be interchangeably interpreted.

A source cell may transmit, to a UE, information related to a configuration of a candidate cell (for example, candidate cell configuration information). The source cell may transmit, to the UE, a PDCCH order (for example, DCI format 1_0) to be used for triggering of a PRACH. The PDCCH order (or DCI) may indicate a candidate cell to be subjected to PRACH trigger/transmission (for example, one candidate cell)/random access occasion (RO). The UE transmits, to the candidate cell, a PRACH in the RACH procedure on the basis of the PDCCH order, for TAG/TA acquisition.

Next, the source cell transmits, to the UE, a response signal (RAR) for the PRACH. The RAR may include information related to the TA (for example, TA indication). The RAR (for example, a PDSCH including the RAR/a PDCCH scheduling the PDSCH) may be monitored in a specific search space (for example, common search space (CSS)) of a specific cell (for example, SpCell), among the current serving cell (only in Distributed Unit (DU)). Then, in the source cell, TA adjustment (for example, TA maintenance) is performed.

Next, the source cell may transmit a cell switch command to the UE. From the source cell to the target cell, TA information may be transferred/notified. The UE may control, after the cell switching, a UL transmission on the basis of the acquired TA. For example, in a case where UL synchronization of all the candidate cells is not completed after the initial cell switch, the UE may perform the first UL transmission by using the initial TA.

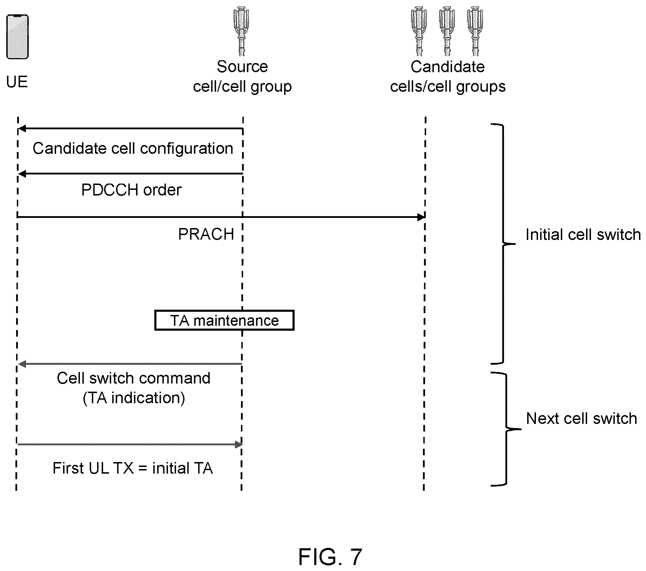

FIG. 7 is a diagram to show an example of a PDCCH ordered RACH without RAR monitoring. Description on FIG. 7 will be given only in a point different from FIG. 6.

In the example of FIG. 7, a PDCCH order to be used for triggering of a PRAH may indicate one or more candidate cells to be subjected to PRACH trigger/transmission (for example, a plurality of candidate cells)/random access occasions. The UE may transmit, to the candidate cells, a PRACH in the RACH procedure on the basis of the PDCCH order, for a plurality of TAG/TA acquisitions. The source cell does not transmit any response signal (for example, RAR) for the PRACH. The source cell may indicate, to the UE, information related to a TA (for example, TA indication) by using a cell switch command.

In the present disclosure, a RACH having no RAR and a RACH having no RAR monitoring (for example, a RACH without RAR monitoring) may be interchangeably interpreted. A RACH may be interpreted as a PRACH transmission triggered by a PDCCH order. A RACH procedure/PRACH transmission without RAR monitoring may be interpreted as a RACH procedure/PRACH transmission not requiring any RAR monitoring or a RACH procedure/PRACH transmission having no RAR monitoring required.

As described above, in LTM, in order to derive a TA for a candidate cell (for example, serving cell/non-serving cell), a RACH may be triggered for the candidate cell. As a method of acquiring a TA for a candidate cell in LTM, a PDCCH ordered RACH may be employed. A PDCCH order may be triggered only by a source cell. A random access preamble index and an indication of a RACH occasion corresponding to an SSB index related may be configured for each candidate cell.

### (UL Transmission Power Control)

In an existing system (for example, Rel. 17 or earlier versions), UL transmission power control (for example, transmit power reduction (transmission power reduction) is supported. For example, a priority order for a UE to allocate power to a UL transmission in a case where total UE transmit power for certain UL channels/UL signals exceeds a certain value (for example, P_{CMAX}) is defined. Examples of the certain UL channels/UL signals may include PUSCHs/PUCCHs/PRACHs/SRSs and the like.

As described above, in a case where inter-cell multi-TRP/LTM is supported, a case is assumed that an additional cell/candidate cell is configured and a UL transmission (for example, PRACH transmission or the like) is performed for the additional cell/candidate cell. In such a case, how power control for the UL transmission is performed is not clear. For example, in a case where a UL transmission to the additional cell/candidate cell have an overlap/collision with a transmission to a serving cell or another additional cell/candidate cell, how the UL transmissions (for example, UL transmission power) are controlled is an issue. Unless such UL transmissions for additional cells/candidate cells are appropriately controlled, quality of communication using a plurality of transmission/reception points may be degraded.

In view of this, the inventors of the present invention studied on UL transmission control for a case that a UL transmission is possible for an additional cell/candidate cell in addition to a serving cell, and came up with the idea of an aspect of the present embodiment.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, drop, stop, cancel, puncture, rate match, postpone, not transmit, and the like may be interchangeably interpreted.

In the present disclosure, a cell group, a serving cell group, a master cell group (MCG), and a secondary cell group (SCG) may be interchangeably interpreted. L1/L2, L1/L2 signaling, and DCI/MAC CE may be interchangeably interpreted. A serving cell may be interpreted as a cell where a PDSCH is transmitted. A candidate cell may mean a cell of candidate to be a serving cell in L1/L2 inter-cell mobility.

In the present disclosure, a cell, a PCI, a serving cell, a source serving cell, a source cell, a CC, a BWP, a BWP in a CC, and a band may be interchangeably interpreted. In the present disclosure, a cell, a PCI, a cell of an additional PCI, an additional cell, another cell, a non-serving cell, a cell having a different PCI, a candidate cell, a candidate serving cell, a cell having a PCI different from a PCI of a current serving cell, another serving cell, and a target cell may be interchangeably interpreted. In the present disclosure, switch, change, and update may be interchangeably interpreted. A serving cell may be interpreted as a serving cell before switch or a serving cell after switch.

L1L2-triggered mobility (LTM) and L1/L2 inter-cell mobility may be interchangeably interpreted.

### (Radio Communication Method)

### <Prioritization for Transmit Power Reduction>

Prioritization for transmit power to be reduced will be described. In a case of a single-cell operation with two uplinks or a case of an operation with carrier aggregation, when total UE transmit power for transmissions of PUSCHs, PUCCHs, PRACHs, or SRSs in a serving cell in a frequency range of respective transmission occasions i is foreseen to exceed P⁻_{CMAX}(i) (here, P⁻ _{CMAX}(i) is a linear value of P_{CMAX}(i) in transmission occasions i), a UE allocates power to the PUSCH/PUCCH/PRACH/SRS transmissions in accordance with a priority order (descending order) to be described later below. With this, control is made such that the total UE transmit power for transmissions in the serving cell of the frequency range is smaller than or equivalent to P⁻_{CMAX}(i) of the frequency range for all the symbols of transmission occasions i.

For the purpose of power allocation, in a case where the UE is provided with a specific RRC parameter (uci-MuxWithDiffPrio) and the UE multiplexes HARQ-ACK information to a PUSCH, a priority order index of the PUSCH is the larger one of either (a) the priority order index of the PUSCH or (b) a priority order index of larger HARQ-ACK information. In a case of determining total transmit power for the serving cell of the frequency range for symbols of transmission occasions i, power for a transmission to be started after the symbols of transmission occasions i is not included by the UE. The total UE transmit power for symbols of a slot is defined to be the sum of linear values of UE transmit power for PUSCHs, PUCCHs, PRACHs, and SRSs for the symbols of the slot.

### {Priority Order}

(1) PRACH transmission on a PCell
(2) PUCCH or PUSCH transmission with a larger priority order index (for example, priority index)
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) SRS transmission (aperiodic SRS transmission with a priority higher than that of semi-persistent SRS/periodic SRS), or PRACH transmission on a serving cell other than a PCell

In a case of the same priority order and of an operation with carrier aggregation, the UE performs power allocation, prioritizing a transmission on a primary cell of an MCG or SCG with respect to a transmission on a secondary cell. In a case of the same priority order and of an operation using two UL carriers, the UE prioritizes power allocation for a transmission on a carrier configured for the UE to transmit a PUCCH. When neither of the two UL carriers is configured with any PUCCH, the UE prioritizes power allocation for a transmission on a nonsupplement UL carrier.

As described above, in a case where total UE transmit power exceeds a specific value (P⁻_{CMAX}(i)), the UE performs power allocation taking account of the priority order.

### <First Embodiment>

A first embodiment relates to UL transmission control taking account of a UL transmission for multi-TRP (for example, inter-cell multi-TRP) and a UL transmission of an existing system (for example, Rel. 17 or earlier versions).

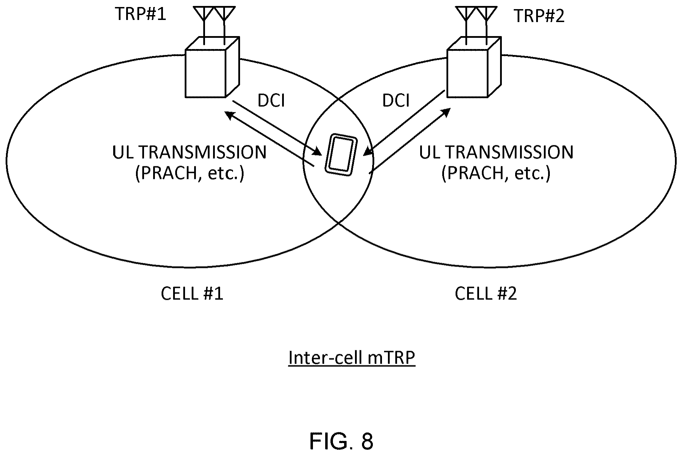

In a case where inter-cell multi-TRP (inter-cell M-TRP) is employed (see FIG. 8), a UE may receive information related to an additional cell (for example, additional PCI) by using higher layer signaling or the like. FIG. 8 shows an example of inter-cell multi-TRP. Here, a case is shown where TRP #1 is configured for cell #1 and TRP #2 is configured for cell #2. For example, cell #1 may correspond to a serving cell (for example, PCell or SCell) and cell #2 may correspond to an additional cell.

In a case where, for inter-cell multi-TRP, an additional cell is configured for a certain serving cell (for example, PCell/SCell), a priority order may be defined/configured for a UL transmission with respect to the additional cell. In the following, although description is made taking a PRACH transmission as an example of the UL transmission, the UL transmission that the present embodiment is applicable to is not limited to PRACH. For another UL transmission to be transmitted to the additional cell, a priority order may be

### defined/configured.

In a case where multi-TRP is employed, a plurality of (for example, two) CORESET pool indices may be configured by using higher layer signaling or the like. A UE may perform control to receive PDCCHs/pieces of DCI in CORESETs corresponding to the respective CORESET pool indices.

In a case where inter-cell multi-TRP (inter-cell M-TRP) is supported, when total UE transmit power exceeds a specific value (for example, P_{CMAX}), control may be made such that a UE performs power allocation on the basis of a priority order corresponding to each UL transmission to perform one or more UL transmissions.

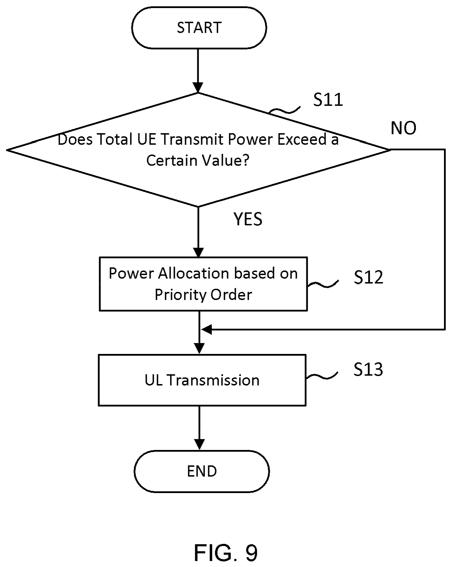

FIG. 9 is a flowchart to show an example of UL transmission control (for example, UL transmission power control). In a case where total UE transmit power exceeds a specific value (for example, P_{CMAX}) (YES in step S11), a UE performs, for a plurality of uplinks (ULs), power allocation on the basis of a priority order (step S12) to transmit the plurality of ULs (step S13).

Here, prioritization for transmit power to be reduced may take account of a UL transmission (for example, PRACH transmission) to an additional cell. The priority order may be defined in a specification, or may be configured/indicated for a UE by using higher layer signaling/physical layer signaling.

For a priority order of a PRACH transmission with respect to an additional cell, at least one of Option 1-1 to Option 1-4 below may be employed.

### {Option 1-1}

For the priority order of the PRACH transmission with respect to the additional cell, a priority order the same as that of a PRACH with respect to a certain serving cell (for example, PCell/SCell) that the additional cell corresponds to (or is configured for) may be defined/employed.

For example, in a case where the additional cell is configured for a PCell (or with respect to the PCell), a priority order the same as that of a PRACH transmission with respect to the PCell may be defined/employed for the priority order of the PRACH transmission with respect to the additional cell. In a case where the additional cell is configured for a serving cell other than the PCell (or with respect to a serving cell other than the PCell), a priority order the same as that of a PRACH transmission with respect to the serving cell other than the PCell may be defined/employed for the priority order of the PRACH transmission with respect to the additional cell. Such a serving cell other than the PCell may be an SCell.

A case where an additional cell is configured with respect to a certain cell may mean a case that any TCI state (or activated TCI state) of the certain cell is associated with the additional cell.

In the present disclosure, a PRACH transmission for an additional cell (for example, PRACH transmission on additional cell) may be interpreted as a PRACH transmission for a non-serving cell (PRACH transmission on non-serving cell), a PRACH transmission associated with an additional PCI (PRACH transmission associated with additional PCI), or a PRACH transmission associated with an additional RACH configuration (PRACH transmission associated with additional RACH configuration).

As an example of a priority order to be employed for power control for a UL transmission, the following priority order may be defined/employed.
(1) PRACH transmission on a PCell, or PRACH transmission on an additional cell corresponding to the PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) SRS transmission (aperiodic SRS transmission with a priority higher than that of semi-persistent SRS/periodic SRS), PRACH transmission on a serving cell other than a PCell, or PRACH transmission on an additional cell corresponding to the serving cell other than the PCell

The PRACH transmission on the additional cell of (1) may be for a case where the additional cell is configured for inter-cell multi-TRP in the PCell. Alternatively, this may be for a case where any TCI state of the PCell (or activated TCI state of the PCell) is associated with the additional cell.

The PRACH transmission on the additional cell of (4) may be for a case where the additional cell is configured for inter-cell multi-TRP in the serving cell (for example, SCell) other than the PCell. Alternatively, this may be for a case where any TCI state of the serving cell other than the PCell (or activated TCI state of the serving cell other than the PCell) is associated with the additional cell.

### <<Variations>>

Alternatively, a priority order of a PRACH transmission for an additional cell corresponding to a certain serving cell (PCell/SCell) may be defined/configured to be lower than a priority order of a PRACH transmission for the certain serving cell.

As an example of a priority order to be employed for power control for a UL transmission, the following priority order may be defined/employed.
(1) PRACH transmission on a PCell
   (1.5) PRACH transmission on an additional cell corresponding to the PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) SRS transmission (aperiodic SRS transmission with a priority higher than that of semi-persistent SRS/periodic SRS), or PRACH transmission on a serving cell other than a PCell
   (4.5) PRACH transmission on an additional cell corresponding to the serving cell other than the PCell

In this case, the PRACH transmission for the PCell being a serving cell can be prioritized with respect to the PRACH transmission for the additional cell corresponding to the PCell. Further, the PRACH transmission for the serving cell other than the PCell can be prioritized with respect to the PRACH transmission for the additional cell corresponding to the serving cell other than the PCell.

Note that, in the variations, although a case is described where priority orders (1.5) and (4.5) indicated in Option 1-1 are provided, the variations are not limited to this. Only either (1.5) or (4.5) may be additionally provided.

### {Option 1-2}

For a PRACH transmission with respect to an additional cell, a priority order the same as that of a serving cell (for example, SCell) other than a PCell may be defined/employed. In other words, irrespective of types (PCell/SCell) of the serving cell that the additional cell corresponds to, the priority order of the PRACH transmission with respect to the additional cell may be determined.

For example, for both a PRACH transmission for an additional cell corresponding to a PCell and a PRACH transmission for an additional cell corresponding to an SCell, the same priority order (for example, a priority order the same as that for a PRACH transmission of the SCell) may be defined/employed.

As an example of a priority order to be employed for power control for a UL transmission, the following priority order may be defined/employed.
(1) PRACH transmission on a PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) SRS transmission (aperiodic SRS transmission with a priority higher than that of semi-persistent SRS/periodic SRS), PRACH transmission on a serving cell other than a PCell, or PRACH transmission on an additional cell

### {Option 1-3}

For a PRACH transmission with respect to an additional cell, a priority order lower than that of a serving cell (for example, a serving cell (SCell) other than a PCell) may be defined/employed. In other words, irrespective of types of the serving cell that the additional cell corresponds to, the priority order of the PRACH transmission with respect to the additional cell may be configured to be lower than a priority order of a PRACH transmission for the serving cell other than the PCell.

For example, for both a PRACH transmission for an additional cell corresponding to a PCell and a PRACH transmission for an additional cell corresponding to an SCell, the same priority order (for example, a priority order lower than that of a PRACH transmission for a serving cell other than the PCell) may be defined/employed.

As an example of a priority order to be employed for power control for a UL transmission, the following priority order may be defined/employed.
(1) PRACH transmission on a PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) SRS transmission (aperiodic SRS transmission with a priority higher than that of semi-persistent SRS/periodic SRS), or PRACH transmission on a serving cell other than a PCell
(5) PRACH transmission on an additional cell

### {Option 1-4}

For a PRACH transmission with respect to an additional cell, a priority order lower than that of a PCell and higher than that of a serving cell (for example, SCell) other than the PCell may be defined/employed. In other words, irrespective of types of the serving cell that the additional cell corresponds to, the priority order of the PRACH transmission with respect to the additional cell may be configured to be lower than a priority order of a PRACH transmission for the PCell and higher than a priority order of a PRACH transmission for a serving cell other than the PCell.

As an example of a priority order to be employed for power control for a UL transmission, the following priority order may be defined/employed.
(1) PRACH transmission on a PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
   (3.5) PRACH transmission on an additional cell
(4) SRS transmission (aperiodic SRS transmission with a priority higher than that of semi-persistent SRS/periodic SRS), or PRACH transmission on a serving cell other than a PCell

### <<Variations>>

Alternatively, based on types (PCell/SCell) of a serving cell that an additional cell corresponds to, different priority orders may be defined/configured. For example, a priority order of a PRACH transmission for an additional cell corresponding to a PCell may be configured to be higher than a priority order of a PRACH transmission for a serving cell other than the PCell, and a priority order of a PRACH transmission for an additional cell corresponding to a serving cell other than the PCell may be configured to be lower than a priority order of a PRACH transmission for the serving cell other than the PCell.

As an example of a priority order to be employed for power control for a UL transmission, the following priority order may be defined/employed.
(1) PRACH transmission on a PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
   (3.5) PRACH transmission on an additional cell corresponding to the PCell
(4) SRS transmission (aperiodic SRS transmission with a priority higher than that of semi-persistent SRS/periodic SRS), or PRACH transmission on a serving cell other than a PCell
   (4.5) PRACH transmission on an additional cell corresponding to the serving cell other than the PCell

### {Variations}

In the first embodiment (or at least one of Option 1-1 to Option 1-4), the following configuration may be employed.

For different cases, different priority orders (for example, different options) may be employed. Such different cases may include the following cases.
- First case: PRACH transmission on an additional cell for a case where the additional cell is configured for inter-cell multi-TRP of a serving cell other than a PCell. In other words, that is PRACH transmission on an additional cell for a case where any TCI state of a serving cell other than a PCell (or activated TCI state of a serving cell other than the PCell) is associated with the additional cell.
- Second case: PRACH transmission on an additional cell for a case where the additional cell is configured for inter-cell multi-TRP of a PCell. In other words, that is PRACH transmission on an additional cell for a case where any TCI state of a PCell (or activated TCI state of the PCell) is associated with the additional cell.
The different cases may include the following cases.

For example, case 1 may have a priority order higher than that for case 2. Alternatively, case 2 may have a priority order higher than that for case 1.

An option to be applied to a PRACH transmission may be determined based on a CORESET pool index. For example, for PRACH transmissions related to different CORESET pool indices (CORESET pool index = 0 or 1), different options may be applied.

An option to be applied to a PRACH transmission may be determined based on a TAG ID. For example, for PRACH transmissions related to different TAG IDs (for example, lower TAG ID or highe TAG ID), different options may be applied.

A priority order to be employed for a PRACH transmission may be determined (or a position of priority order may be determined) based on a CORESET pool index. For example, for PRACH transmissions related to different CORESET pool indices (CORESET pool index = 0 or 1), different priority orders (or different positions of priority order) may be employed. Such determination of a priority order based on the CORESET pool indices may be applied to another UL transmission (for example, PUSCH/PUCCH/SRS). For example, PUSCH/PUCCH/SRS transmissions related to different CORESET pool indices may have different priority orders.

A priority order to be employed for a PRACH transmission may be determined (or a position of priority order may be determined) based on a TAG ID. For example, for PRACH transmissions related to different TAG IDs (for example, lower TAG ID or highe TAG ID), different priority orders (or different positions of priority order) may be employed. Such determination of a priority order based on the TAG IDs may be applied to another UL transmission (for example, PUSCH/PUCCH/SRS). For example, PUSCH/PUCCH/SRS transmissions related to different TAG IDs may have different priority orders.

Association between a PRACH transmission (or another UL transmission) and a CORESET pool index may be determined based on a certain rule. The certain rule may be association based on a PCI/TCI state.

For example, based on association between a PRACH transmission (or another UL transmission) and a PCI and association between a PCI and a CORESET pool index, association between a PRACH transmission and a CORESET pool index may be determined.

Based on association between a PRACH transmission (or another UL transmission) and a PCI, association between a PCI and a TCI state, and association between a TCI state and a CORESET pool index, association between a PRACH transmission and a CORESET pool index may be determined.

Based on association between a PRACH transmission (or another UL transmission) and a TCI state and association between a TCI state and a CORESET pool index, association between a PRACH transmission and a CORESET pool index may be determined.

Association between a PRACH transmission (or another UL transmission) and a TAG ID may be determined based on a certain rule. The certain rule may be association based on a PCI/TCI state.

For example, based on association between a PRACH transmission (or another UL transmission) and a PCI and association between a PCI and a TAG ID, association between a PRACH transmission and a TAG ID may be determined.

Based on association between a PRACH transmission (or another UL transmission) and a PCI, association between a PCI and a TCI state, and association between a TCI state and a TAG ID, association between a PRACH transmission and a TAG ID may be determined.

Based on association between a PRACH transmission (or another UL transmission) and a TCI state and association between a TCI state and a TAG ID, association between a PRACH transmission and a TAG ID may be determined.

### <Second Embodiment>

A second embodiment relates to UL transmission control taking account of a UL transmission for multi-TRP (for example, inter-cell multi-TRP) and a UL transmission for L1/L2 inter-cell mobility (for example, L1L2-triggered mobility (LTM)). The second embodiment may be employed in combination with the first embodiment.

In a case where inter-cell multi-TRP (inter-cell M-TRP)/LTM) is supported/configured, a UE may receive information related to an additional cell (for example, additional PCI)/information related to a candidate cell (for example, candidate cell ID/candidate PCI) by using higher layer signaling or the like. Such an additional cell and a candidate cell may be configured in common, may be configured separately, or part of them may be configured in common.

In a case where inter-cell multi-TRP (inter-cell M-TRP)/LTM is supported, when total UE transmit power exceeds a specific value (for example, P_{CMAX}), control may be made such that a UE performs power allocation on the basis of a priority order corresponding to each UL transmission to perform one or more UL transmissions (see FIG. 9).

In a case where total UE transmit power exceeds a specific value (for example, P_{CMAX}), a UE performs, for a plurality of uplinks (ULs), power allocation on the basis of a priority order to transmit the plurality of ULs.

Here, prioritization for transmit power to be reduced may take account of a UL transmission (for example, PRACH transmission) to an additional cell/a UL transmission (for example, PRACH transmission) to a candidate cell. The priority order may be defined in a specification, or may be configured/indicated for a UE by using higher layer signaling/physical layer signaling.

For a priority order of a PRACH transmission with respect to an additional cell/a PRACH transmission with respect to a candidate cell, at least one of Option 2-1 to Option 2-3 below may be applied.

### {Option 2-1}

It may be defined/employed that a priority order of a PRACH transmission with respect to an additional cell (or an additional cell for inter-cell multi-TRP) is the same as a priority order of a PRACH transmission with respect to a candidate cell (or a candidate cell for LTM).

In this case, for a relation between the priority order of the PRACH transmission with respect to the additional cell/the PRACH transmission with respect to the candidate cell and a priority order of another UL transmission (for example, PUSCH/PUCCH/SRS), at least one of Option 1-1 to Option 1-4 in the first embodiment may be applied.

As an example of a priority order to be employed for power control for a UL transmission, the following priority order may be defined/employed.
(1) PRACH transmission on a PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) SRS transmission (aperiodic SRS transmission with a priority higher than that of semi-persistent SRS/periodic SRS), PRACH transmission on a serving cell other than a PCell, PRACH transmission on an additional cell, or PRACH transmission on a candidate cell

Alternatively, as another example of the priority order to be employed for power control for a UL transmission, the following priority order may be defined/employed.
(1) PRACH transmission on a PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) SRS transmission (aperiodic SRS transmission with a priority higher than that of semi-persistent SRS/periodic SRS), or PRACH transmission on a serving cell other than a PCell
(5) PRACH transmission on an additional cell, or PRACH transmission on a candidate cell

Note that the priority order of the PRACH transmission with respect to the additional cell/the PRACH transmission with respect to the candidate cell is not limited to this. The priority order may be configured in a position between any ones of priority orders (1) to (4).

### {Option 2-2}

It may be defined/employed that a priority order of a PRACH transmission with respect to an additional cell (or an additional cell for inter-cell multi-TRP) is higher than a priority order of a PRACH transmission with respect to a candidate cell (or a candidate cell for LTM).

In this case, for a relation between the priority order of the PRACH transmission with respect to the additional cell, the priority order of the PRACH transmission with respect to the candidate cell, and a priority order of another UL transmission (for example, PUSCH/PUCCH/SRS), at least one of Option 1-1 to Option 1-4 in the first embodiment may be applied.

As an example of a priority order to be employed for power control for a UL transmission, the following priority order may be defined/employed.
(1) PRACH transmission on a PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) SRS transmission (aperiodic SRS transmission with a priority higher than that of semi-persistent SRS/periodic SRS), or PRACH transmission on a serving cell other than a PCell
(5) PRACH transmission on an additional cell
(6) PRACH transmission on a candidate cell

Alternatively, as another example of the priority order to be employed for power control for a UL transmission, the following priority order may be defined/employed.
(1) PRACH transmission on a PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) PRACH transmission on an additional cell
(5) PRACH transmission on a candidate cell
(6) SRS transmission (aperiodic SRS transmission with a priority higher than that of semi-persistent SRS/periodic SRS), or PRACH transmission on a serving cell other than a PCell

Alternatively, as another example of the priority order to be employed for power control for a UL transmission, the following priority order may be defined/employed.
(1) PRACH transmission on a PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) SRS transmission (aperiodic SRS transmission with a priority higher than that of semi-persistent SRS/periodic SRS), PRACH transmission on a serving cell other than a PCell, or PRACH transmission on an additional cell
(5) PRACH transmission on a candidate cell

Note that the priority order of the PRACH transmission with respect to the additional cell/the PRACH transmission with respect to the candidate cell is not limited to this. The priority order may be configured in a position between any ones of priority orders (1) to (3). Although a case is described where the priority order of the PRACH transmission with respect to the additional cell and the priority order of the PRACH transmission with respect to the candidate cell are sequential, the priority orders are not limited to this.

### {Option 2-3}

It may be defined/employed that a priority order of a PRACH transmission with respect to an additional cell (or an additional cell for inter-cell multi-TRP) is lower than a priority order of a PRACH transmission with respect to a candidate cell (or a candidate cell for LTM).

In this case, for a relation between the priority order of the PRACH transmission with respect to the additional cell, the priority order of the PRACH transmission with respect to the candidate cell, and a priority order of another UL transmission (for example, PUSCH/PUCCH/SRS), at least one of Option 1-1 to Option 1-4 in the first embodiment may be applied.

As an example of a priority order to be employed for power control for a UL transmission, the following priority order may be defined/employed.
(1) PRACH transmission on a PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) SRS transmission (aperiodic SRS transmission with a priority higher than that of semi-persistent SRS/periodic SRS), or PRACH transmission on a serving cell other than a PCell
(5) PRACH transmission on a candidate cell
(6) PRACH transmission on an additional cell

Alternatively, as another example of the priority order to be employed for power control for a UL transmission, the following priority order may be defined/employed.
(1) PRACH transmission on a PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) PRACH transmission on a candidate cell
(5) PRACH transmission on an additional cell
(6) SRS transmission (aperiodic SRS transmission with a priority higher than that of semi-persistent SRS/periodic SRS), or PRACH transmission on a serving cell other than a PCell

Alternatively, as another example of the priority order to be employed for power control for a UL transmission, the following priority order may be defined/employed.
(1) PRACH transmission on a PCell
(2) PUCCH or PUSCH transmission with a larger priority order index
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) SRS transmission (aperiodic SRS transmission with a priority higher than that of semi-persistent SRS/periodic SRS), PRACH transmission on a serving cell other than a PCell, or PRACH transmission on a candidate cell
(5) PRACH transmission on an additional cell

Note that the priority order of the PRACH transmission with respect to the additional cell/the PRACH transmission with respect to the candidate cell is not limited to this. The priority order may be configured in a position between any ones of priority orders (1) to (3). Although a case is described where the priority order of the PRACH transmission with respect to the additional cell and the priority order of the PRACH transmission with respect to the candidate cell are sequential, the priority orders are not limited to this.

### {Variations}

In the second embodiment (or at least one of Option 2-1 to Option 2-3), the following configuration may be employed.

For different cases, different priority orders (for example, different options) may be employed. Such different cases may include the following cases.
- First case: PRACH transmission on an additional cell for a case where the additional cell is configured for inter-cell multi-TRP of a serving cell other than a PCell. In other words, that is PRACH transmission on an additional cell for a case where any TCI state of a serving cell other than a PCell (or activated TCI state of a serving cell other than the PCell) is associated with the additional cell.
- Second case: PRACH transmission on an additional cell for a case where the additional cell is configured for inter-cell multi-TRP of a PCell. In other words, that is PRACH transmission on an additional cell for a case where any TCI state of a PCell (or activated TCI state of the PCell) is associated with the additional cell.
The different cases may include the following cases.

For example, case 1 may have a priority order higher than that for case 2. Alternatively, case 2 may have a priority order higher than that for case 1.

An option to be applied to a PRACH transmission may be determined based on a CORESET pool index. For example, for PRACH transmissions related to different CORESET pool indices (CORESET pool index = 0 or 1), different options may be applied.

An option to be applied to a PRACH transmission may be determined based on a TAG ID. For example, for PRACH transmissions related to different TAG IDs (for example, lower TAG ID or highe TAG ID), different options may be applied.

A priority order to be employed for a PRACH transmission may be determined (or a position of priority order may be determined) based on a CORESET pool index. For example, for PRACH transmissions related to different CORESET pool indices (CORESET pool index = 0 or 1), different priority orders (or different positions of priority order) may be employed. Such determination of a priority order based on the CORESET pool indices may be applied to another UL transmission (for example, PUSCH/PUCCH/SRS). For example, PUSCH/PUCCH/SRS transmissions related to different CORESET pool indices may have different priority orders.

A priority order to be employed for a PRACH transmission may be determined (or a position of priority order may be determined) based on a TAG ID. For example, for PRACH transmissions related to different TAG IDs (for example, lower TAG ID or highe TAG ID), different priority orders (or different positions of priority order) may be employed. Such determination of a priority order based on the TAG IDs may be applied to another UL transmission (for example, PUSCH/PUCCH/SRS). For example, PUSCH/PUCCH/SRS transmissions related to different TAG IDs may have different priority orders.

Association between a PRACH transmission (or another UL transmission) and a CORESET pool index may be determined based on a certain rule. The certain rule may be association based on a PCI/TCI state.

For example, based on association between a PRACH transmission (or another UL transmission) and a PCI and association between a PCI and a CORESET pool index, association between a PRACH transmission and a CORESET pool index may be determined.

Based on association between a PRACH transmission (or another UL transmission) and a PCI, association between a PCI and a TCI state, and association between a TCI state and a CORESET pool index, association between a PRACH transmission and a CORESET pool index may be determined.

Based on association between a PRACH transmission (or another UL transmission) and a TCI state and association between a TCI state and a CORESET pool index, association between a PRACH transmission and a CORESET pool index may be determined.

Association between a PRACH transmission (or another UL transmission) and a TAG ID may be determined based on a certain rule. The certain rule may be association based on a PCI/TCI state.

For example, based on association between a PRACH transmission (or another UL transmission) and a PCI and association between a PCI and a TAG ID, association between a PRACH transmission and a TAG ID may be determined.

Based on association between a PRACH transmission (or another UL transmission) and a PCI, association between a PCI and a TCI state, and association between a TCI state and a TAG ID, association between a PRACH transmission and a TAG ID may be determined.

Based on association between a PRACH transmission (or another UL transmission) and a TCI state and association between a TCI state and a TAG ID, association between a PRACH transmission and a TAG ID may be determined.

### <Third Embodiment>

A third embodiment relates to UL transmission control taking account of a UL transmission for multi-TRP (for example, inter-cell multi-TRP) and a UL transmission for L1/L2 inter-cell mobility (for example, L1L2-triggered mobility (LTM)). The third embodiment may be employed in combination with the first embodiment/second embodiment.

The priority order of another UL transmission (for example, PUSCH/PUCCH/SRS) other than the PRACH transmission described in the first embodiment/second embodiment may be changed. For example, depending on transmission types of an SRS (periodic/semi-persistent/aperiodic), different priority orders for the SRS may be configured.

As an example, a priority order of an aperiodic SRS transmission (for example, Aperiodic SRS) may be configured to be higher than a priority order of a semi-persistent SRS (for example, semi persistent SRS)/periodic SRS transmission.
(1) PRACH transmission on a PCell
(2) PUCCH or PUSCH transmission with a larger priority order index (for example, priority index)
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) Aperiodic SRS transmission, or PRACH transmission on a serving cell other than a PCell
(5) Semi-persistent/periodic SRS transmission

In a case where a priority order of an SRS transmission is determined depending on transmission types of the SRS, a priority order of a PRACH transmission for an additional cell/a PRACH transmission for a candidate cell may also be taken into account.

For example, the priority order of the PRACH transmission for the additional cell/the PRACH transmission for the candidate cell may be configured to be lower than a priority order of a semi-persistent SRS/periodic SRS transmission. As an example of a priority order to be employed for power control for a UL transmission, the following priority order may be
defined/employed.
(1) PRACH transmission on a PCell
(2) PUCCH or PUSCH transmission with a larger priority order index (for example, priority index)
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) Aperiodic SRS transmission, or PRACH transmission on a serving cell other than a PCell
(5) Semi-persistent/periodic SRS transmission
(6) PRACH transmission on an additional cell, or PRACH transmission on a candidate cell

For example, the priority order of the PRACH transmission for the additional cell/the PRACH transmission for the candidate cell may be configured to be lower than that of an aperiodic SRS transmission or a PRACH transmission on a serving cell other than a PCell, and higher than a priority order of a semi-persistent SRS/periodic SRS transmission. As an example of a priority order to be employed for power control for a UL transmission, the following priority order may be defined/employed.
(1) PRACH transmission on a PCell
(2) PUCCH or PUSCH transmission with a larger priority order index (for example, priority index)
(3) For PUCCH or PUSCH transmission with the same priority order index, the priority order is to be the highest to lowest in accordance with the order from (3-1) to (3-3):
   (3-1) PUCCH transmission including HARQ-ACK information/SR/LRR, or PUSCH transmission including HARQ-ACK information of a priority index
   (3-2) PUCCH transmission including CSI or PUSCH transmission including CSI
   (3-3) PUSCH transmission that includes no HARQ-ACK information of a priority order index or CSI and that is for Type-2 random access procedure, PUSCH transmission on a PCell
(4) Aperiodic SRS transmission, or PRACH transmission on a serving cell other than a PCell
   (4.5) PRACH transmission on an additional cell, or PRACH transmission on a candidate cell
(5) Semi-persistent/periodic SRS transmission

Here, although a case is described where the PRACH transmission on the additional cell and the PRACH transmission on the candidate cell have the same priority order, this is not restrictive, and the PRACH transmission on the additional cell may have a priority order different from that of the PRACH transmission on the candidate cell.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semipersistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semipersistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:
- supporting of specific
   processing/operation/control/information for at least one of the above-described embodiments/options
- supporting of inter-cell multi-TRP
- supporting of L1/L2 inter-cell mobility (for example, L1L2-triggered mobility (LTM))
- supporting of PRACH transmission to an additional cell/candidate cell

The specific UE capability may be capability applied over all the frequencies (commonly irrespective of frequency), capability per frequency (for example, any one or any combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Note)

Regarding one embodiment of the present disclosure, the following supplementary notes of the invention will be given.

### {Supplementary Note 1-1}

A terminal including: a receiving section that receives information related to an additional cell corresponding to a serving cell; and a control section that controls, in a case where total transmit power exceeds a certain value when a plurality of UL transmissions are performed including a random access channel for the additional cell and another UL transmission, power allocation for a UL transmission on the basis of a priority order corresponding to a random access channel transmission for the additional cell and a priority order corresponding to another UL transmission.

### {Supplementary Note 1-2}

The terminal according to supplementary note 1-1, wherein a different priority order is configured per type of the serving cell corresponding to the additional cell, as the priority order corresponding to the random access channel transmission for the additional cell.

### {Supplementary Note 1-3}

The terminal according to supplementary note 1-1 or 1-2, wherein the same priority order is configured irrespective of types of the serving cell corresponding to the additional cell, as the priority order corresponding to the random access channel transmission for the additional cell.

### {Supplementary Note 1-4}

The terminal according to any one of supplementary notes 1-1 to 1-3, wherein the priority order corresponding to the random access channel transmission for the additional cell is configured to be lower than a priority order corresponding to a random access channel transmission for a serving cell.

### {Supplementary Note 2-1}

A terminal including: a receiving section that receives at least one of information related to an additional cell corresponding to a serving cell and information related to a candidate cell applied with cell switching by L1/L2 signaling; and a control section that controls, in a case where total transmit power exceeds a certain value when a plurality of UL transmissions are performed including at least two of a random access channel for the additional cell, a random access channel for the candidate cell, and another UL transmission, power allocation for a UL transmission on the basis of at least one of a priority order corresponding to a random access channel transmission for the additional cell, a priority order corresponding to a random access channel transmission for the candidate cell, and a priority order corresponding to another UL transmission.

### {Supplementary Note 2-2}

The terminal according to supplementary note 2-1, wherein the priority order corresponding to the random access channel transmission for the additional cell is the same as the priority order corresponding to the random access channel transmission for the candidate cell.

### {Supplementary Note 2-3}

The terminal according to supplementary note 2-1 or 2-2, wherein the priority order corresponding to the random access channel transmission for the additional cell is higher than the priority order corresponding to the random access channel transmission for the candidate cell.

### {Supplementary Note 2-4}

The terminal according to any one of supplementary notes 2-1 to 2-3, wherein the priority order corresponding to the random access channel transmission for the additional cell is lower than the priority order corresponding to the random access channel transmission for the candidate cell.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

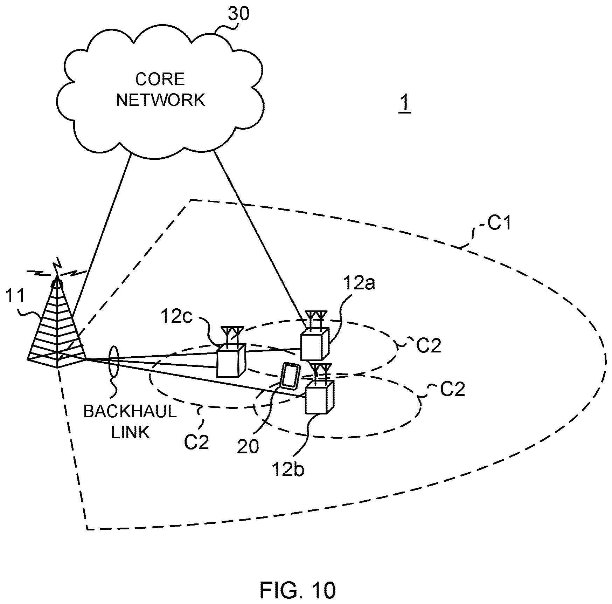

FIG. 10 is a diagram to show an example of a schematic structure of the radio communication system according to one embodiment. The radio communication system 1 (which may be simply referred to as system 1) may be a system that implements communication by using Long Term Evolution (LTE), 5th generation mobile communication system New Radio (5G NR), or the like the specification of which has been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz) and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected to each other by a wired connection (for example, optical fiber in compliance with the Common Public Radio Interface (CPRI), the X2 interface, or the like) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

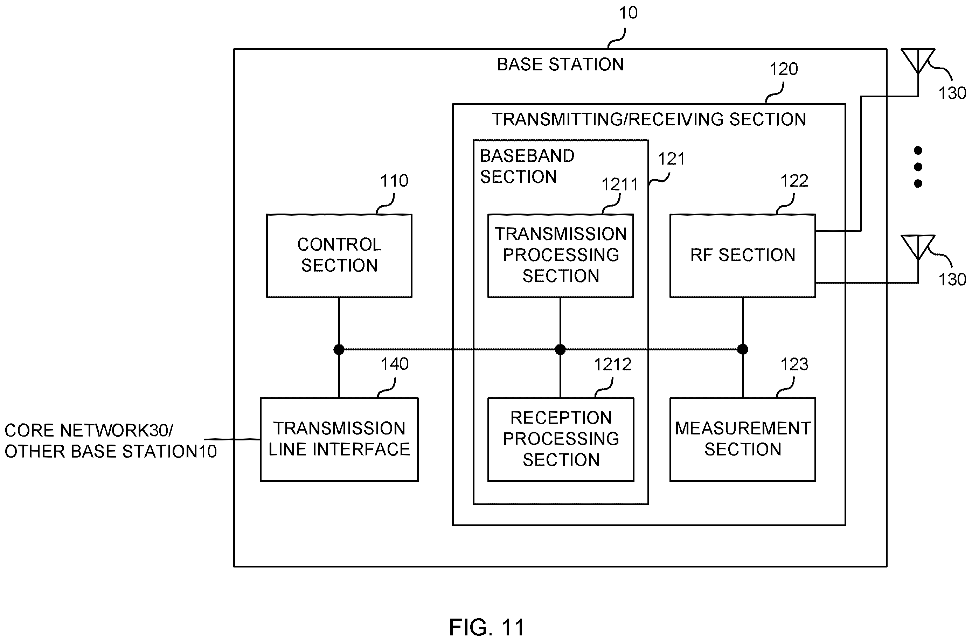

FIG. 11 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit, to a terminal, information related to an additional cell corresponding to a serving cell. The control section 110 may judge, in a case where total transmit power exceeds a certain value when the terminal performs a plurality of UL transmissions including a random access channel for the additional cell and another UL transmission, power allocation for a UL transmission is employed based on a priority order corresponding to a random access channel transmission for the additional cell and a priority order corresponding to another UL transmission.

The transmitting/receiving section 120 may transmit, to the terminal, at least one of information related to an additional cell corresponding to a serving cell and information related to a candidate cell applied with cell switching by L1/L2 signaling. The control section 110 may judge, in a case where total transmit power exceeds a certain value when the terminal performs a plurality of UL transmissions including at least two of a random access channel for the additional cell, a random access channel for the candidate cell, and another UL transmission, power allocation for a UL transmission is employed based on at least one of a priority order corresponding to a random access channel transmission for the additional cell, a priority order corresponding to a random access channel transmission for the candidate cell, and a priority order corresponding to another UL transmission.

### (User Terminal)

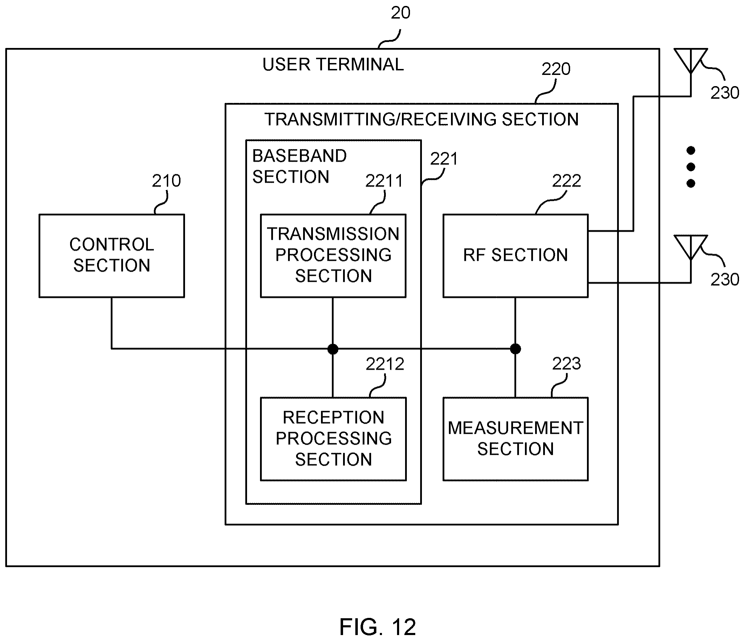

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to an additional cell corresponding to a serving cell. The control section 210 may control, in a case where total transmit power exceeds a certain value when a plurality of UL transmissions are performed including a random access channel for the additional cell and another UL transmission, power allocation for a UL transmission on the basis of a priority order corresponding to a random access channel transmission for the additional cell and a priority order corresponding to another UL transmission.

As the priority order corresponding to the random access channel transmission for the additional cell, a different priority order may be configured per type of the serving cell corresponding to the additional cell. As the priority order corresponding to the random access channel transmission for the additional cell, the same priority order may be configured irrespective of types of the serving cell corresponding to the additional cell. The priority order corresponding to the random access channel transmission for the additional cell may be configured to be lower than a priority order corresponding to a random access channel transmission for the serving cell.

The transmitting/receiving section 220 may receive at least one of information related to an additional cell corresponding to a serving cell and information related to a candidate cell applied with cell switching by L1/L2 signaling. The control section 210 may control, in a case where total transmit power exceeds a certain value when a plurality of UL transmissions are performed including at least two of a random access channel for the additional cell, a random access channel for the candidate cell, and another UL transmission, power allocation for a UL transmission on the basis of at least one of a priority order corresponding to a random access channel transmission for the additional cell, a priority order corresponding to a random access channel transmission for the candidate cell, and a priority order corresponding to another UL transmission.

The priority order corresponding to the random access channel transmission for the additional cell may be the same as the priority order corresponding to the random access channel transmission for the candidate cell. The priority order corresponding to the random access channel transmission for the additional cell may be configured to be higher than the priority order corresponding to the random access channel transmission for the candidate cell. The priority order corresponding to the random access channel transmission for the additional cell may be configured to be lower than the priority order corresponding to the random access channel transmission for the candidate cell.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

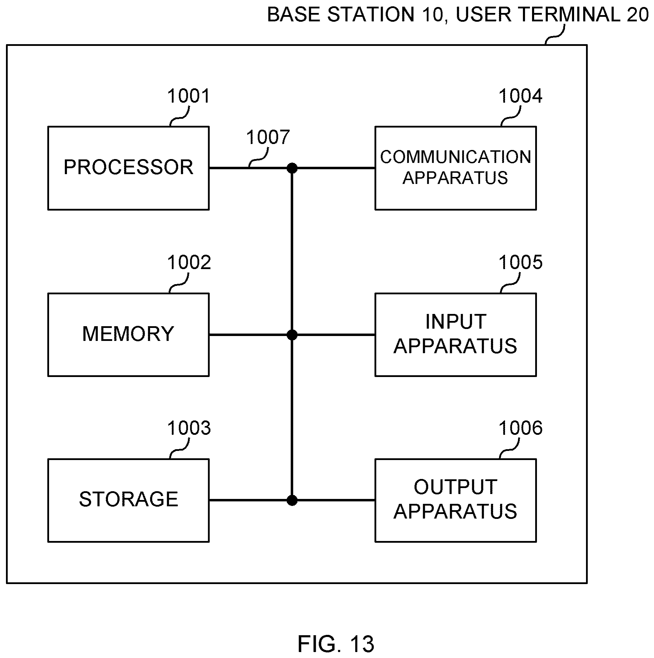

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

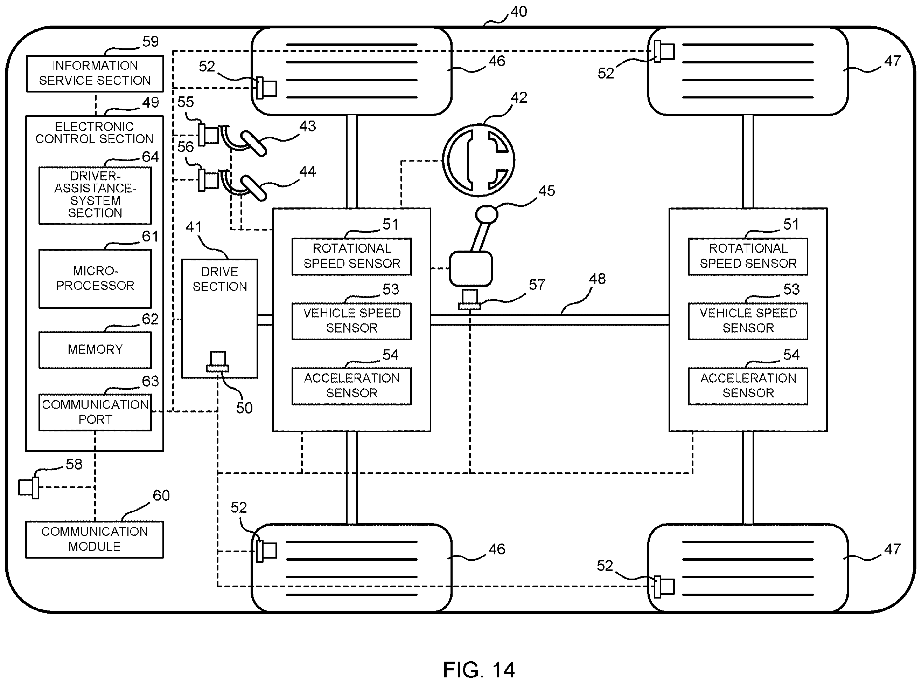

FIG. 14 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives information related to an additional cell corresponding to a serving cell; and
a control section that controls, in a case where total transmit power exceeds a certain value when a plurality of UL transmissions are performed including a random access channel for the additional cell and another UL transmission, power allocation for a UL transmission on a basis of a priority order corresponding to a random access channel transmission for the additional cell and a priority order corresponding to another UL transmission.

2. The terminal according to claim 1, wherein
a different priority order is configured per type of the serving cell corresponding to the additional cell, as the priority order corresponding to the random access channel transmission for the additional cell.

3. The terminal according to claim 1, wherein
a same priority order is configured irrespective of types of the serving cell corresponding to the additional cell, as the priority order corresponding to the random access channel transmission for the additional cell.

4. The terminal according to claim 1, wherein
the priority order corresponding to the random access channel transmission for the additional cell is configured to be lower than a priority order corresponding to a random access channel transmission for a serving cell.

5. A radio communication method for a terminal, the radio communication method comprising:
receiving information related to an additional cell corresponding to a serving cell; and
controlling, in a case where total transmit power exceeds a certain value when a plurality of UL transmissions are performed including a random access channel for the additional cell and another UL transmission, power allocation for a UL transmission on a basis of a priority order corresponding to a random access channel transmission for the additional cell and a priority order corresponding to another UL transmission.

6. A base station comprising:
a transmitting section that transmits, to a terminal, information related to an additional cell corresponding to a serving cell; and
a control section that judges, in a case where total transmit power exceeds a certain value when the terminal performs a plurality of UL transmissions including a random access channel for the additional cell and another UL transmission, power allocation for a UL transmission is employed based on a priority order corresponding to a random access channel transmission for the additional cell and a priority order corresponding to another UL transmission.
